# EUROPÄISCHE PATENTSCHRIFT

(11) **EP 4 146 462 B1**
(45) Veröffentlichungstag und Bekanntmachung des Hinweises auf die Patenterteilung: **16.10.2024**
(21) Anmeldenummer: 21708103.3
(22) Anmeldetag: 16.02.2021
(51) Int. Cl.: B29D 12/02

(54) **VERFAHREN ZUM HERSTELLEN EINES BRILLENBÜGELS**
METHOD FOR PRODUCING A SPECTACLE ARM
MÉTHODE DE PRODUCTION D'UNE BRANCHE DE LUNETTES

(30) Priorität: 04.05.2020 AT 503762020
(43) Veröffentlichungstag der Anmeldung: 15.03.2023
(73) Patentinhaber: Silhouette International Schmied AG, 4020 Linz (AT)
(72) Erfinder: LAUBER, Martin, 4614 Marchtrenk (AT)
(74) Vertreter: Hübscher & Partner Patentanwälte GmbH
(86) Internationale Anmeldenummer: PCT/AT2021/060053
(87) Internationale Veröffentlichungsnummer: WO 2021/222953

(56) Entgegenhaltungen:
- EP-A1- 3 413 120
- FR-A- 1 038 336
- KR-B1- 100 872 314

## Beschreibung

### Technisches Gebiet

Die Erfindung bezieht sich auf ein Verfahren zum Herstellen eines Brillenbügels, der einen Bügelkörper aus Kunststoff und eine metallische Stützeinlage aufweist, wobei der Bügelkörper additiv mit einer Aufnahmeaussparung für die Stützeinlage gefertigt und dann die Stützeinlage in die Aufnahmeaussparung des Bügelkörpers eingebracht wird, sowie auf einen Brillenbügel mit einem additiv gefertigten Bügelkörper.

### Stand der Technik

Die additive Fertigung von Brillenbügeln, beispielsweise durch ein selektives Lasersintern, aber auch mit anderen Druckverfahren, bietet sich insbesondere für eine Bügelproduktion in Kleinserien an. Additive Fertigungsverfahren sind jedoch nicht geeignet, im Bügelkörper metallische Stützeinlagen vorzusehen. Um bei additiv hergestellten Bügelkörpern aus Kunststoff nicht auf metallische Stützeinlagen verzichten zu müssen, ist es bekannt (EP 3 413 120 A1), den Bügelkörper mit einer Aufnahmeaussparung in Form eines Längskanals zu fertigen, in den dann die drahtförmige Stützeinlage axial eingeschossen wird. Nachteilig ist allerdings, dass der Längskanal des additiv gefertigten Bügelkörpers aufwendig vom Sinterpulver befreit werden muss, bevor die drahtförmige Stützeinlage in den Längskanal von einer der Stirnseiten des Bügelkörpers eingeschossen werden kann. Außerdem ist die mögliche Ausgestaltung der Stützeinlage im Hinblick auf das axiale Einschießen in den Längskanal erheblich beschränkt. Wegen des für das Einschießen notwendigen, weitgehend geraden Achsverlaufs des Längskanals kann der Bügelkörper erst nach dem Einschießen der Stützeinlage größeren Verformungen im Zuge des Bügelverlaufs unterworfen werden. Dazu kommt, dass Querschnittsänderungen der Stützeinlage nur bedingt möglich Das Dokument EP 3 413 120 A1 offenbart ein Verfahren nach den Merkmalen des Oberbegriffs des Anspruchs 1, und das Dokument KR 100 872 314 B1 offenbart einen Brillenbügel mit einem Bügelkörperteil, der eine sich zumindest entlang eines Bügelkörperteilabschnitts erstreckende Längsnut aufweist.

### Darstellung der Erfindung

Der Erfindung liegt somit die Aufgabe zugrunde, ein Verfahren zum Herstellen eines Brillenbügels, der einen additiv gefertigten Brillenkörper aus Kunststoff mit einer metallischen Stützeinlage aufweist, so auszugestalten, dass hinsichtlich der Ausbildung des Bügels und der Stützeinlage keine Einschränkungen in Kauf genommen werden müssen.

Ausgehend von einem Verfahren der eingangs geschilderten Art löst die Erfindung die gestellte Aufgabe dadurch, dass der Bügelkörper mit einer sich zumindest entlang eines Bügelkörperabschnitts erstreckenden Längsnut als Aufnahmeaussparung additiv gefertigt wird und dass die Längsnut mit der eingebrachten Stützeinlage mit Kunststoff ausgespritzt wird.

Das Vorsehen einer Längsnut als Aufnahmeaussparung für die Stützeinlage schafft die Voraussetzung für ein einfaches Einbringen der Stützeinlage in die Aufnahmeaussparung des additiv gefertigten Bügelkörpers, weil diese Stützeinlage quer zu ihrer Längsachse in die über ihre Länge offene Längsnut eingelegt werden kann. Der Bügelkörper kann somit bereits im Wesentlichen entsprechend der angestrebten Bügelform mit einem dieser Bügelform folgenden Verlauf der Längsnut gedruckt werden, in die dann die entsprechend diesem Verlauf vorgeformte Stützeinlage eingelegt wird. Die Stützeinlage kann dabei, z. B. zur Anpassung an unterschiedliche Festigkeits- und Verformungsanforderungen, mit unterschiedlichen Querschnitten über ihre Länge versehen sein, weil diese Querschnittsänderungen entweder durch das Raumangebot in der Längsnut oder durch eine entsprechende Ausformung der Längsnut berücksichtigt werden können. Die formschlüssige Halterung der Stützeinlage in der Längsnut wird ja durch das Ausspritzen der die Stützeinlage aufnehmenden Längsnut mit Kunststoff gesichert.

Additiv gefertigte Bügelkörper weisen im allgemeinen eine Oberfläche auf, die den an eine Bügeloberfläche zu stellenden Anforderungen nicht genügt und daher einer Nachbearbeitung bzw. einer Beschichtung bedarf. Diese Oberflächenveredelung des Bügelkörpers kann je nach den eingesetzten Materialien und Arbeitsverfahren entweder vor dem Einsetzen der Stützeinlage in die Längsnut oder erst dann durchgeführt werden, wenn die mit der Stützeinlage versehene Längsnut bereits mit Kunststoff ausgespritzt wurde.

Die erfindungsgemäß hergestellten Brillenbügel zeichnen sich durch eine weitgehende Gestaltungsfreiheit aus, und zwar im Hinblick sowohl auf die Bügelform als auch auf die Ausgestaltung der Stützeinlage, wobei nicht nur vergleichsweise einfache Herstellungsbedingungen gewahrt werden, sondern auch vorteilhaft auf die jeweiligen mechanischen Belastungsanforderungen eingegangen werden kann. Das Ausspritzen der die Stützeinlage aufnehmenden Längsnut des Bügelkörpers mit Kunststoff stellt in vorteilhafter Weise einen Toleranzausgleich aufgrund der formschlüssigen Verbindung zwischen der Stützeinlage und dem Bügelkörper über den Spritzgussverschluss der Längsnut sicher, sodass die Stützfunktion der Stützeinlage für den Brillenbügel voll zum Tragen kommt. Der Spritzgussverschluss der Längsnut kann je nach der Materialwahl und der Oberflächenveredelung des Brillenbügels optisch entweder unterdrückt oder als Gestaltungselement genützt werden.

Zur besseren Fixierung der Stützeinlage in der Längsnut des Bügelkörpers können die Enden der Stützeinlage in Sacklöchern an den Stirnseiten der Längsnut eingreifen. Zum gleichen Zweck kann die Längsnut über ihre Länge verteilte Klemmrasten für die eingesetzte Stützeinlage aufweisen.

Bildet die Längsnut eine Hinterschneidung, so wird diese Hinterschneidung durch die Kunststoffausspritzung mit der Wirkung hintergriffen, dass durch den dadurch bedingten Formschluss die Verbindung zwischen dem Bügelkörper und der Kunststoffausspritzung verbessert wird.

### Kurze Beschreibung der Erfindung

Anhand der Zeichnung wird das erfindungsgemäße Verfahren näher erläutert. Es zeigen
- Fig. 1: einen Bügelkörper eines erfindungsgemäßen Brillenbügels ausschnittsweise im Bereich der Aufnahmeaussparung für die Stützeinlage in einer Ansicht auf die Seite mit der Längsnut
- Fig. 2: den fertiggestellten Brillenbügel in einer zum Teil aufgerissenen Ansicht entsprechend der Fig. 2 und
- Fig. 3: einen Schnitt nach der Linie III-III der Fig. 1 in einem größeren Maßstab.

### Wege zur Ausführung der Erfindung

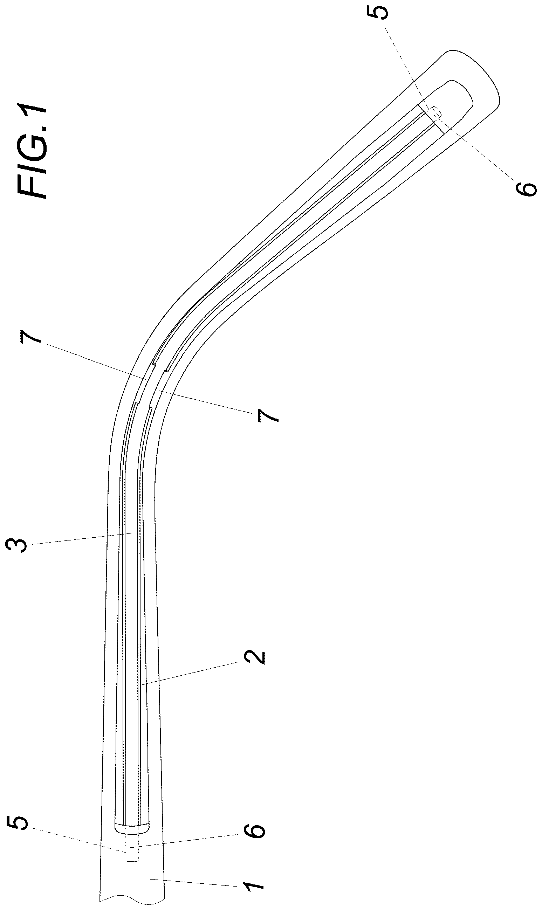

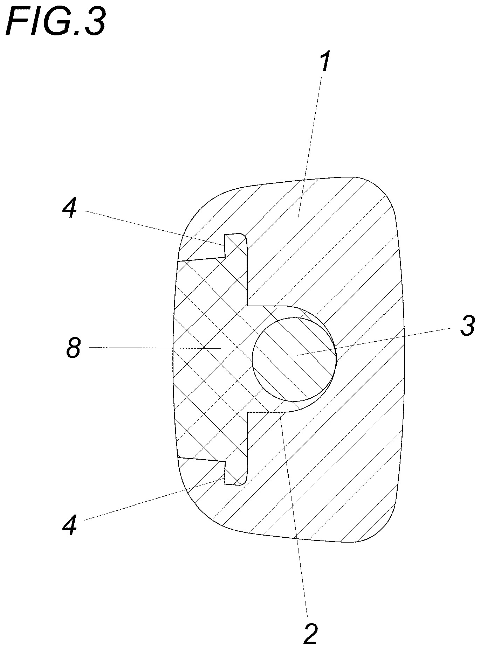

Die Fig. 1 zeigt den additiv aus Kunststoff gefertigten Bügelkörper 1 mit der Aufnahmeaussparung in Form einer Längsnut 2 für eine Stützeinlage 3. Diese Längsnut 2 weist eine Hinterschneidung 4 auf, wie dies insbesondere der Fig. 3 entnommen werden kann. An den Stirnseiten der Längsnut 2 sind Sacklöcher 5 vorgesehen, in die die Enden 6 der Stützeinlage 3 eingreifen, um die Stützeinlage 3 innerhalb der Längsnut 2 zu halten. Zusätzlich sind Klemmrasten 7 entlang der Längsnut 2 vorgesehen, die dem gleichen Zweck dienen.

Da zum Unterschied zu einer Fertigung im Spritzguss bei einer additiven Fertigung des Bügelkörpers 1 die Entformbarkeit nicht berücksichtigt werden muss, ergeben sich hinsichtlich der Fertigung des Bügelkörpers 1 mit der Längsnut 2, die aufgrund der Hinterschneidung 4 und der stirnseitigen Sacklöcher 5 doch aufwendig gestaltet ist, vergleichsweise einfache Herstellungsbedingungen.

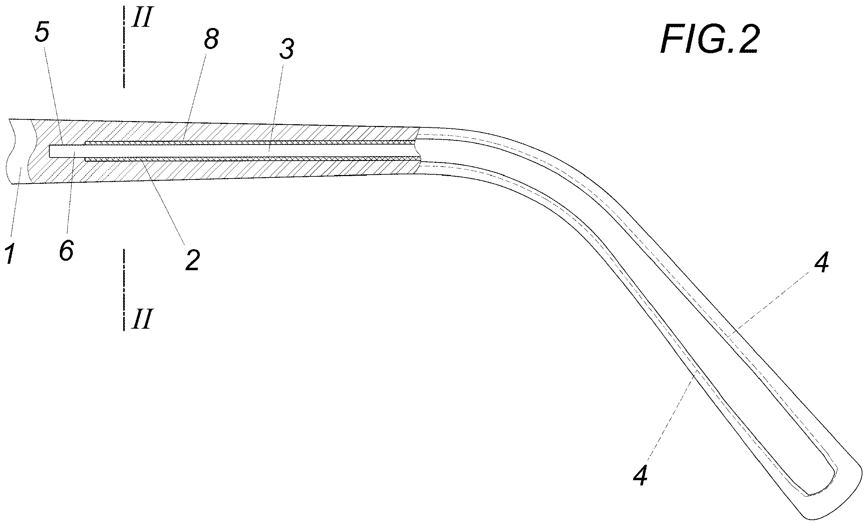

Um die gemäß der Fig. 1 in die Längsnut 2 eingesetzte Stützeinlage 3 formschlüssig mit dem Bügelkörper 1 zu verbinden, wird die Längsnut 2 mit der Stützeinlage 3 mit Kunststoff ausgespritzt. Die hierfür benötigte Spritzgussform ist einfach, weil ja lediglich der eingelegte Bügelkörper entlang der Längsnut dicht an der Form anliegen muss. Nach der Entformung deckt die Kunststoffausspritzung 8 die Längsnut 2 gemäß den Fig. 2 und 3 vollständig ab und sichert eine allen Anforderungen entsprechende Verbindung zwischen dem Bügelkörper 1 und der Stützeinlage 3.

## Patentansprüche

1. Verfahren zum Herstellen eines Brillenbügels, der einen Bügelkörper (1) aus Kunststoff und eine metallische Stützeinlage (3) aufweist, wobei der Bügelkörper (1) additiv mit einer Aufnahmeaussparung für die Stützeinlage (3) gefertigt und dann die Stützeinlage (3) in die Aufnahmeaussparung des Bügelkörpers (1) eingebracht wird, **dadurch gekennzeichnet, dass** der Bügelkörper (1) mit einer sich zumindest entlang eines Bügelkörperabschnitts erstreckenden Längsnut (2) als Aufnahmeaussparung additiv gefertigt wird und dass die Längsnut (2) mit der eingebrachten Stützeinlage (3) mit Kunststoff ausgespritzt wird.

2. Verfahren nach Anspruch 1, **dadurch gekennzeichnet, dass** der additiv gefertigte Bügelkörper (1) vor dem Einbringen der Stützeinlage (3) einer Oberflächenbearbeitung unterworfen und/oder mit einer Beschichtung versehen wird.

3. Verfahren nach Anspruch 1, **dadurch gekennzeichnet, dass** der additiv gefertigte Bügelkörper (1) nach dem Ausspritzen der mit der Stützeinlage (3) versehenen Längsnut (2) mit Kunststoff einer Oberflächenbearbeitung unterworfen und/oder mit einer Beschichtung versehen wird.

4. Brillenbügel mit einem additiv aus Kunststoff gefertigten Bügelkörper (1) und mit einer metallischen Stützeinlage (3) in einer Aufnahmeaussparung des Bügelkörpers (1), wobei die Aufnahmeaussparung als sich zumindest entlang eines Bügelkörperabschnitts erstreckende Längsnut (2) ausgebildet ist, und die Längsnut (2) mit der eingesetzten Stützeinlage (3) eine die Längsnut (2) verschließende Kunststoffausspritzung (8) aufweist.

5. Brillenbügel nach Anspruch 4, **dadurch gekennzeichnet, dass** die Enden (6) der Stützeinlage (3) in Sacklöcher (5) an den Stirnseiten der Längsnut (2) eingreifen.

6. Brillenbügel nach Anspruch 4 oder 5, **dadurch gekennzeichnet, dass** die Längsnut (2) über ihre Länge verteilte Klemmrasten (7) für die eingesetzte Stützeinlage (3) aufweist.

7. Brillenbügel nach einem der Ansprüche 4 bis 6, **dadurch gekennzeichnet, dass** die Längsnut (2) eine Hinterschneidung (4) bildet.

## Claims

1. Method for producing a spectacle arm which has an arm body (1) made of plastic and a metallic support inlay (3), wherein the arm body (1) is manufactured additively with a receiving recess for the support inlay (3) and then the support inlay (3) is introduced into the receiving recess of the arm body (1), **characterized in that** the arm body (1) is manufactured additively with a longitudinal groove (2) as the receiving recess which extends at least along a portion of the arm body, and **in that** the longitudinal groove (2) with the inserted support inlay (3) is injected with plastic.

2. Method according to claim 1, **characterized in that** the additively manufactured arm body (1) is subjected to surface treatment and/or provided with a coating before the support inlay (3) is introduced.

3. Method according to claim 1, **characterized in that** the additively manufactured arm body (1) is subjected to surface treatment and/or provided with a coating after the longitudinal groove (2) provided with the support inlay (3) has been injected with plastic.

4. Spectacle arm having an arm body (1) manufactured additively from plastic and having a metallic support inlay (3) in a receiving recess of the arm body (1), wherein the receiving recess is designed as a longitudinal groove (2) extending at least along an arm body section, and wherein the longitudinal groove (2) with the inserted support inlay (3) has a plastic injection molding (8) closing the longitudinal groove (2).

5. Spectacle arm according to claim 4, **characterized in that** the ends (6) of the support inlay (3) engage in blind holes (5) on the end faces of the longitudinal groove (2).

6. Spectacle arm according to claim 4 or 5, **characterized in that** the longitudinal groove (2) has clamping catches (7) distributed over its length for the inserted support inlay (3).

7. Spectacle arm according to one of claims 4 to 6, **characterized in that** the longitudinal groove (2) forms an undercut (4).

## Revendications

1. Procédé pour la fabrication d'une branche de lunettes qui comporte un corps de branche (1) en matière plastique et une armature de renfort métallique (3), selon lequel le corps de branche (1) est fabriqué par addition avec un évidement de réception pour l'armature de renfort (3) et l'armature de renfort (3) est ensuite insérée dans l'évidement de réception du corps de branche (1), **caractérisé en ce que** le corps de branche (1) est fabriqué par addition avec au moins une gorge longitudinale (2) en guise d'évidement de réception s'étendant au moins le long d'une section de corps de branche, et que de la matière plastique est injectée dans la gorge longitudinale (2) avec l'armature de renfort (3) insérée.

2. Procédé selon la revendication 1, **caractérisé en ce que** le corps de branche (1) fabriqué par addition est soumis à un traitement de surface et/ou doté d'un revêtement avant l'insertion de l'armature de renfort (3).

3. Procédé selon la revendication 1, **caractérisé en ce que** le corps de branche (1) fabriqué par addition est soumis à un traitement de surface et/ou doté d'un revêtement après l'injection de matière plastique dans la gorge longitudinale (2) munie de l'armature de renfort (3).

4. Branche de lunettes avec un corps de branche (1) en matière plastique fabriqué par addition et avec une armature de renfort métallique (3) dans un évidement de réception du corps de branche (1), lequel évidement de réception est configuré comme une gorge longitudinale (2) s'étendant au moins le long d'une section de corps de branche, et laquelle gorge longitudinale (2) avec l'armature de renfort (3) insérée présente une injection de matière plastique (8) obturant ladite gorge longitudinale (2).

5. Branche de lunettes selon la revendication 4, **caractérisée en ce que** les extrémités (6) de l'armature de renfort (3) pénètrent dans des trous borgnes (5) dans les faces frontales de la gorge longitudinale (2).

6. Branche de lunettes selon la revendication 4 ou 5, **caractérisée en ce que** la gorge longitudinale (2) présente des crans de serrage (7) répartis sur sa longueur pour l'armature de renfort (3) insérée.

7. Branche de lunettes selon une des revendications 4 à 6, **caractérisée en ce que** la gorge longitudinale (2) forme une contre-dépouille.
